## Europäisches Patentamt
## European Patent Office
## Office européen des brevets

(19)

(11) Veröffentlichungsnummer: **0 291 002**
**B1**

(12)

# EUROPÄISCHE PATENTSCHRIFT

(45) Veröffentlichungstag der Patentschrift:
**14.11.90**

(51) Int. Cl.⁵: **F03D 1/06**

(21) Anmeldenummer: **88107455.3**

(22) Anmeldetag: **10.05.88**

(54) **Windradflügel.**

(30) Priorität: **14.05.87 AT 1223/87**

(43) Veröffentlichungstag der Anmeldung:
**17.11.88 Patentblatt 88/46**

(45) Bekanntmachung des Hinweises auf die Patenterteilung:
**14.11.90 Patentblatt 90/46**

(84) Benannte Vertragsstaaten:
**AT DE ES FR GB GR IT NL SE**

(56) Entgegenhaltungen:
**DE-A- 3 143 686**
**DE-A- 3 219 930**
**FR-A- 906 427**
**FR-A- 2 288 877**
**FR-A- 2 292 878**

(73) Patentinhaber: **Wildenauer, Anton, Auf dem Wingert 3, D-6101 Rossdorf(DE)**

(72) Erfinder: **Wildenauer, Anton, Auf dem Wingert 3, D-6101 Rossdorf(DE)**

ACTORUM AG

## Beschreibung

Die Erfindung betrifft den Flügel eines Windrades zur Verwertung der Windenergie, wie es z.B. zur Erzeugung von Strom oder den Betrieb von Wasserpumpen und anderen Geräten verwendet wird. Der Windradflügel kommt vorzugsweise an langsamlaufenden Windrädern mit etwa horizontaler Drehachse zur Anwendung. An jedem Windrad ist meistens eine Vielzahl solcher Windflügel angebracht.

Windräder, deren Flügel schwenkbar und auch federnd mit dem Holm verbunden sind, gibt es bereits. Im Windrad nach der FR-PS 906427 besitzt jeder Holm einen Steg r, der durch das nabenferne Holmende mit dem Holm schwenkbar verbunden ist. Ähnlich ist die Lösung nach US-PS 867990. Auch hier steckt je ein Steg 26 im nabenfernen Holmende jedes Holmes. Da jeder Holm nur ein nabenfernes Holmende hat, kann nach diesen beiden Patentschriften auch jeder Holm nur einen Flügel tragen. Den Kräften am Windrad kann aber ein einziger Flügel je Holm nicht elastisch genug begegnen.

Der Windradflügel nach AT-PS 99817 sieht für die Flügeldrehung einen Torsionsstab vor, der im Holminneren liegt. Auch dieser Torsionsstab tritt nur über das nabenfern Holmende mit dem Flügel in Verbindung. In einer zweiten Ausführungsart dreht der Torsionsstab den ganzen, mit dem Flügel verbundenen Außenholm. Keine der beiden Ausführungsarten erlaubt es, mehrere Flügel am gleichen Holm unabhängig voneinander schwenkbar zu befestigen.

Das gleiche trifft auch für ein Windrad zu, das nach DE-OS 3143686 gebaut wird. Der Rohrschaft hat nur eine Außenöffnung für den Längsholm und dieser ist nur mit einem Blattprofil fest verbunden. Eine Teilung des Blattprofiles in unabhängig voneinander schwenkbare Flügel ist auch dabei nicht möglich.

Anders ist die Gestaltung des Windrades nach DE-OS 3219930. Bei diesem Windrad umschließt eine Vielzahl von Flügeln den gleichen Holm. Diese Umschließung des Holmes durch die dafür vorgesehenen Flügel- und Federelemente machen den Verbund notwendigerweise breiter, als der Holm allein ist. Der breitere Verbund bietet dem Wind mehr nicht nutzbaren Widerstand als der schlankere Holm. Außerdem verhindert die Umschließung, daß der Holm an seiner gesamten Luvseite frei ist für die Anbringung von Haltevorrichtungen.

Bei keinem der bekannten Windräder ist es möglich, daß ein Holm mehrere Flügel tragen kann, diese Flügel unabhängig voneinander schwenkbar gelagert sind wobei jeder Flügel sein Schwenklager und seine Feder bzw. seine Schwenklager und seine Ferdern im Holminneren untergebracht hat. Die vorliegende Erfindung vermeidet die Mängel der bekannten Vorrichtungen.

Die Aufgabe wird vorzüglich dadurch gelöst, daß Holm und Flügel formschlüßig nebeneinander liegen. Dieser Verbund hat gemeinsam ein stromlinienförmiges Tragflügelprofil. An jedem Holm liegt eine Vielzahl von Flügeln. Die Schwenklager der Flügel und die Rückholfedern sind im Holm untergebracht. Die Verbindung der Flügel mit den Schwenklagern erfolgt durch Öffnungen hindurch, die sich in der Seitenwand des Holmes befinden.

Die Erfindung wird anhand von lediglich zweier Ausführungswege darstellenden Zwichnungen erläutert. Es zeigt

Fig. 1 den Schnitt durch einen Teil des Windradflügels in der Holmachse, ohne Berücksichtigung verschiedener Anstellwinkel;
Fig. 2 den Schnitt II-II, senkrecht zur Holmachse;
Fig. 3 eine stärker verkleinerte Draufsicht auf den ganzen Windradflügel;
Fig. 4 eine Draufsicht auf Holm und Flügel in der Holmachse;
Fig. 5 Schnitt durch einen Flügel in der Holmachse;
Fig. 6 Schnitt durch einen Flügel in der Holmachse;
Fig. 7 Schnitt VII-VII, parallel zur Holmachse;
Fig. 8 Schnitt VIII-VIII, parallel zur Holmachse.

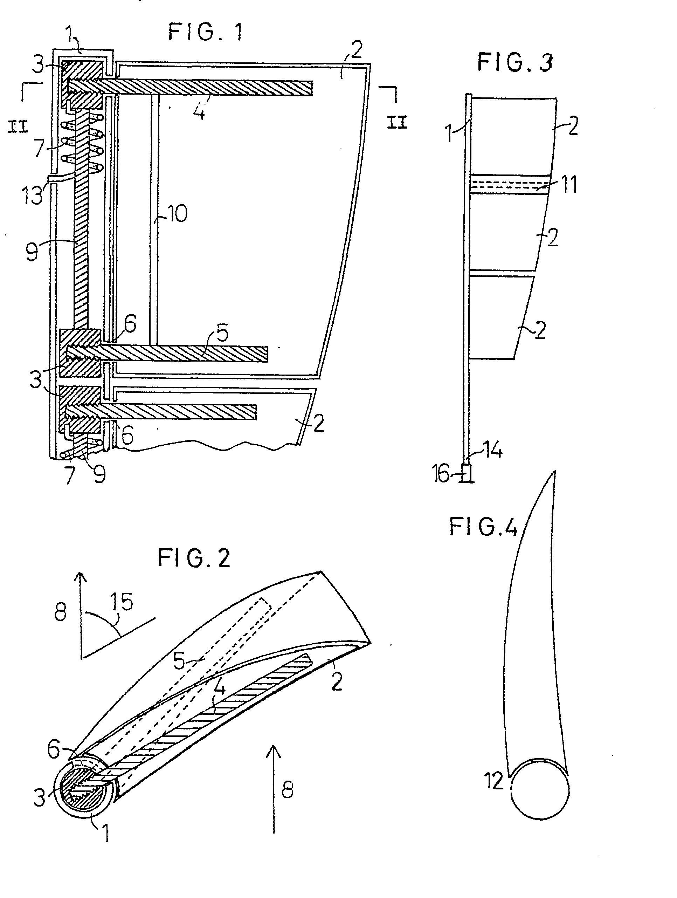

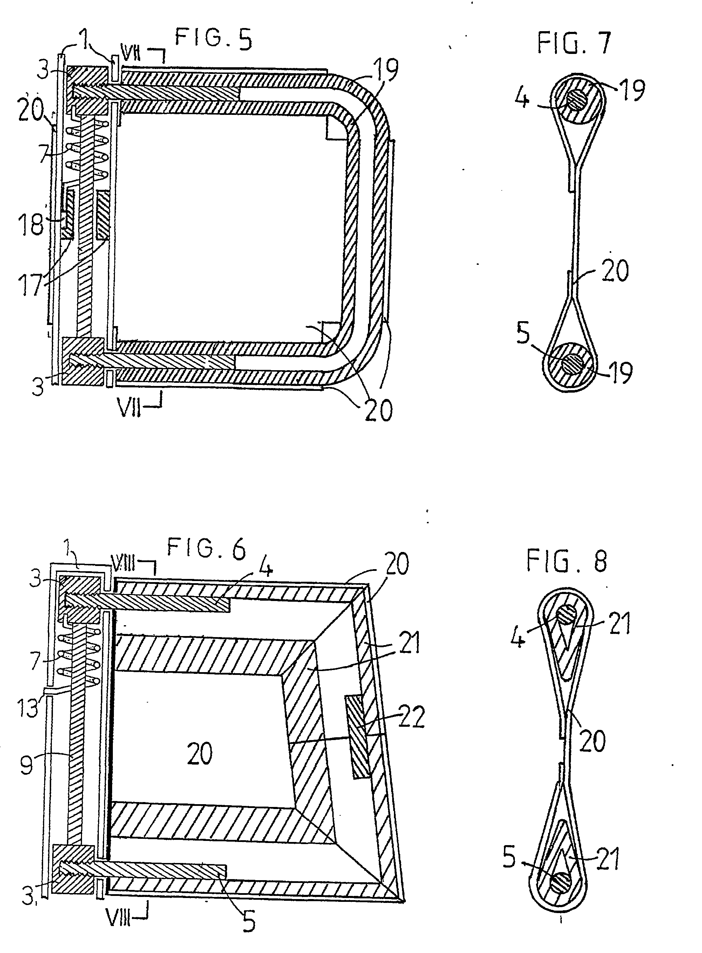

Die Teile sind folgendermaßen angeordnet und gestaltet:
Der Holm 1 besteht vorzüglich aus einem Stahlrohr. Er ist an der Nabenseite 14 mit der Achse des Windrades verbunden. Nebenferne sowie auch im Mittelbereich, besonders an der Luvseite des Holmes 1 und rechtwinkelig dazu, kann der Holm durch Zugseile wirtschaftlich abgestützt werden. An der Leeseite des Holmes 1 hängen mehrere Flügel 2 nebeneinander. Jeder Flügel 2 liegt formschlüssig am Holm 1 an, wie Fig. 4 zeigt. Die Flügel 2 sind vorzüglich aus Aluminiumblech oder faserverstärktem Kunststoff hergestellt. Die Flügel 2 sind so gestaltet, daß Flügel und Holm 1 gemeinsam ein stromlinienförmiges Tragflügelprofil 12 besitzen. Bei entsprechender Wahl des Anstellwinkels 15 zur Windrichtung 8 sorgt dieses Tragflügelprofil 12 für eine starke Auftriebskraft in der Drehrichtung des Windrades bei nur geringer Windwirbelbildung. Jeder Flügel 2 hängt vorzüglich an zwei Schwenklagern 3. Die Schwenklager 3 liegen im Holm 1. Die Verbindung zwischen Flügel 2 und Schwenklager 3 wird durch einen Steg, 4,5 hergestellt, der vom Flügel durch die Öffnung 6 an der Längsseite des Holmes 1 hindurch zum Schwenklager führt. Die Öffnung 6 ist vorzüglich ein längliches Bohrloch, breit genug, um eine Schwenkung des Steges 4,5 un damit des Flügels 2 von der Anstellung bis etwa in die Achsrichtung des Windrades zu erlauben. Diese Achsrichtung entspricht im Betrieb der Windrichtung 8. Aus aerodynamischen Gründen ist der Anstellwinkel 15 im nabenfernen Teil des Holmes 1 größer als im nabennahen Teil. Dementsprechend ist auch ein größerer Anstellwinkel 15 am nabenferneren Steg 4 und damit am nabenferneren Bereich des Flügels 2, ein kleinerer Anstellwinkel am nabennäheren Steg 5 und damit am nabennäheren Bereich des Flügels. In der Sicht entlang des Holmes 1 liegt der Flügel 2 schraubenförmig um den Holm gedreht, ähnlich dem Flügel einer Schiffsschraube. Der Flügel 2 wird durch die Rückholfeder 7 in die Anstellung zur Windrichtung 8 gedrückt. Die Rückholfeder 7 ist vorzüglich eine zylindrische Schenkelfeder aus Stahl, die sich im Holm 1 befindet. Ein Schenkel der Rückholfeder 7 ist an der Halterung 13 am oder im Holm 1 befestigt, der zweite am drehbaren Teil des Schwenklagers 3. Bei zu starkem Winddruck auf den Flügel 2 dreht sich der Flügel unter Anspannung der Rückholfeder 7 in die Windrichtung 8. Die Rückholfeder 7 hat eine verstellbare Halterung 13 zur Regelung der Vorspannung. Die Halterung ist durch den Holm 1 geführt. Eine andere Ausbildung ist ein Hohlzylinder 17, der im Holm 1 liegt und mit diesem verstellbar verbunden ist. (Fig. 5.) Ein Federlager 18 im Hohlzylinder 17 nimmt einen Schenkel der Rückholfeder 7 auf. Durch den Hohlzylinder 17 ist die Brücke 9 drehbar geführt. Der Holm 1 steckt, um seine Längsachse drehbar, in einem Holmfuß 16. Durch eine Drehung des Holmes 1 wird der Anstellwinkel 15 aller Flügel 2 am gleichen Holm verändert. Die beiden Schwenklager 3 des gleichen Flügels 2 sind durch eine Brücke 9 verbunden. Dies erhöht die Festigkeit und erspart einen Teil der Rückholfedern 7. Um ein ungenutztes Abströmen des Windes durch den Spaltzwischen zwei Flügeln 2 zu vermeiden, ist ein Deckstreifen 11 vorgesehen. Dieser ist entweder aus festem Material, z.B. Blech, und ist vorzüglich luvseitig an einem der Flügel 2 befestigt. Er überdeckt den Spalt und ev. auch ein Stück des benachbarten Flügels 2. Ist der Deckstreifen 11 aus elastischem Material kann er auch an beiden benachbarten Flügeln 2 befestigt sein. Ein Stützrahmen 10, vorzüglich im Inneren des Flügels 2 liegend und mit dem Steg 4,5 verbunden, gibt dem Flügel zusätzliche Festigkeit.

Die Flügel 2 des Windradflügels können erfindungsgemäß auch aus bespannten Rahmen bestehen, wie Fig. 5 bis 8 zeigt. Der U- oder trapezförmige Rohrbogen 19 ist mit einem Ende auf den nabenfernen Steg 4, mit dem anderen Ende auf den nabennahen Steg 5 aufgesteckt und mit diesem verbunden. Der Rohrbogen 19 trägt, ev. gemeinsam mit einem Teil des Holmes 1, die Bespannung 20. Diese Bespannung 20 kann eine dünne Folie aus Kunststoff, Segeltuch oder Metall sein, die vorzüglich um den Rohrbogen 19 und um einen Teil des Holmes 1 geführt und verschweißt oder vernäht ist, wie Fig. 7 und 8 zeigt. Anstelle des Rohrbogens 19 kann ein Rahmen aus einem im Querschnitt tropfenförmigen Profilstab 21 treten, da dieser in Richtung aud die Rahmenmitte eine höhere Zugfestigkeit aufweist. Siehe Fig 6 und 8. Der aus dem Rohrbogen 19 oder dem Profilstab 21 bestehende Rahmen kann auch aus zwei oder mehr Teilen bestehen, die durch einen Verbinder 22 fest oder trennbar zusammengehalten werden.

## Patentansprüche

1. Windradflügel, für ein Windrad zur Verwertung der Windenergie, vorzüglich mit horizontaler Drehachse, bestehand aus einem Holm sowie einem oder mehreren Flügeln, die sich an der Längsseite des Holmes befinden, mit ihm verdrehbar verbunden sind und unter der Wirkung einer Rückholfeder in eine Ruhelage gedrückt werden, dadurch gekennzeichnet, daß jeder Flügel (2) über mindestens einen Steg (4,5) mit mindestens einem Schwenklager (3) verbunden ist, das sich innerhalb des Holmes (1) befindet, und daß der Steg durch eine Öffnung (6) in der Längsseite des Holmes hindurchtritt.

2. Windradflügel nach Anspruch 1, dadurch gekennzeichnet, daß die Rückholfeder (7) im Inneren des Holmes (1) angeordnet ist.

3. Windradflügel nach Anspruch 1 oder 2, dadurch gekennzeichnet, daß die einander zugewandten Flächen des Flügels (2) und des Holmes (1) formschlüssig zueinander passen, so daß Flügel und Holm gemeinsam ein stromlinienförmiges Tragflügelprofil (12) bilden.

4. Windradflügel nach einem der Ansprüche 1 bis 3, dadurch gekennzeichnet, daß ein nabenfernerer Steg (4) und ein nabenfernerer Bereich des Flügels (2) einen größeren Anstellwinkel (15) zur Windrichtung (8) aufweisen als ein nabennäherer Steg (5) und ein nabennähere Bereich des Flügels.

5. Windradflügel nach einem der Ansprüche 1 bis 4, dadurch gekennzeichnet, daß der Holm (1) um seine Längsachse drehbar in order an einem Holmfuß (16) gelagert ist.

6. Windradflügel nach einem der Ansprüche 1 bis 5, dadurch gekennzeichnet, daß mindestens zwei Schwenklager (5) durch eine Brücke (9) miteinander verbunden sind.

7. Windradflügel nach einem der Ansprüche 1 bis 6, dadurch gekennzeichnet, daß die Halterung (13) der Rückholfeder (7) verstellbar angeordnet ist.

8. Windradflügel nach einem der Ansprüche 1 bis 7, dadurch gekennzeichnet, daß ein Deckstreifen (11) zur Überdeckung des Spaltes zwischen zwei benachbarten Flügeln (2) an einem der Flügel oder an beiden Flügeln befestigt ist.

9. Windradflügel nach einem der Ansprüche 1 bis 8, dadurch gekennzeichnet, daß im oder am Flügel (2) ein zwei Stege (4,5) dieses Flügels verbindender Stützrahmen (10) vorhanden ist.

10. Windradflügel nach einem der Ansprüche 1 bis 9, dadurch gekennzeichnet, daß der Flügel (2) einen Rahmen mit einer Bespannung (20) aufweist, wobei der Rahmen vorzugsweise aus einem Rohrbogen (19) oder einem im Querschnitt tropfenförmigen Profilstab (21) besteht, der mit einem Ende auf den nabenfernen Steg (4), mit dem anderen Ende auf den nabennahen Steg (5) aufgesteckt und mit diesem fest oder trennbar verbunden ist, wobei der Rohrbogen oder der Profilstab auch aus mehreren Teilen bestehen kann, die mittels eines Verbinders (22) fest oder trennbar zusammengefügt sind.

## Claims

1. A blade for a windmill rotor to use the energy of wind, preferably with a horizontal axis of rotation, comprising one spar and one vane or several vanes provided at the longitudinal side of the spar, the vane is pressed into a neutral position by a return spring, characterized in that each vane (2) is connected with at least one web (4, 5) with at least one pivot bearing (3) which is inside the spar (1), the web passes through an aperture (6) in the longitudinal side of the spar.

2. A blade according to claim 1, characterized in that the return spring (7) is arranged inside the spar (1).

3. A blade according to claim 1 or 2, characterized in that the surfaces of the vane (2) and the spar (1) which face to each other are well matched so as to form a streamlined airfoil (12).

4. A blade according to one of the claims 1 to 3, characterized in that a web ren-lote from the hub (4) and a section of the vane (2) remote from the hub have a greater angle of incidence (15) to the direction of the wind (8) than the web nearer to the hub (5) and the vane nearer to the hub do.

5. A blade according to one of the claims 1 to 4, characterized in that the spar (1) is supported at a spar root (16) to be rotatable about its longitudinal axis.

6. A blade according to one of the claims 1 to 5, characterized in that at least two pivot bearings (3) are connected with each other by a crossbar (9).

7. A blade according to one of the claims 1 to 6, characterized in that the return spring (7) has an adjustable retension (13).

8. A blade according to one of the claims 1 to 7, characterized in that a cover strip (11) is attached to one vane (2) or both vanes to cover the gap between two adjacent vanes.

9. A blade according to one of the claims 1 to 8, characterized in that a support frame (10) is provided so as to connect the two webs (4, 5) of this vane (2).

10. A blade according to one of the claims 1 to 9, characterized in that the vane (2) has a porter frame with a covering (20), the porter frame is a shaped pipe (19) or a shaped porter (21), the cross-section may be shaped like a drop, set up and fixed on one end to the web remote from the hub (4) on the other end to the web near to the hub (5), the shaped porter may consist of several parts, connected stable or disconnectable by a connection (22).

**Revendications**

1. Pale de rotor d'éolienne pour la récupération de l'énergie du vent, au mieux avec un axe de rotation horizontale, composée d'un longeron et de une ou plusieurs pales qui se trouvent au côté longitudinal du longeron, qui sont reliées avec celui-ci mobilement, et qui peuvent être poussé dans une position de repos sous l'effet du ressort de rappel, caractérisée en ce que chaque pale (2) est reliée par au moins une traverse (4,5), avec au moins un support pivotant (3) qui se trouve à l'intérieur du longeron (1).

2. Pale de rotor d'éolienne selon revendication 1, caractérisée en ce que le ressort de rappel (7) se trouve à l'intérieur du longeron (1).

3. Pale de rotor d'éolienne selon la revendication 1 ou 2, caractérisée en ce que les surfaces tournées les unes vers les autres de la pale (2) et du longeron (1) sont articulées assorti en forme de façon que pale et longeron ensemble forment un profil aérodynamique.

4. Pale de rotor d'éolienne selon l'une des revendications 1 à 3, caractérisé en ce que la traverse (4) éloignée du moyeu et une zone éloignée du moyeu de la pale (2) présentent un angle d'incidence (15) plus grand à la direction du vent (8) qu'une traverse plus près du moyeu et une zone plus près du moyeu de la pale.

5. Pale de rotor d'éolienne selon une des revendications 1 à 4, caractérisée en ce que le longeron (1) tournant autour de son axe longitudinale est posé dans ou sur le talon du longeron (16).

6. Pale de rotor d'éolienne selon une des revendications 1 à 5, caractérisée en ce qu'au moins deux supports pivotant (3) sont reliés l'un avec l'autre par un pont (9).

7. Pale de rotor d'éolienne selon une des revendications 1 à 6, caractérisée en ce que le point d'attache (13) du ressort de rappel (7) est posé réglable.

8. Pale de rotor d'éolienne selon une des revendications 1 à 7, caractérisée en ce que la lamelle de recouvrement (11) pour le recouvrement de l'espace entre deux pales (2) avoisinée est fixée sur une des pales ou sur les deux pales.

9. Pale de rotor d'éolienne selon une des revendications 1 à 8, caractérisée en ce que, dans ou sur la pale (2) se trouve un cadre d'appui (10) qui relie deux traverses (4,5) de cette pale.

10. Pale de rotor d'éolienne selon une des revendications 1 à 9, caractérisée en ce que la pale (2) possède un cadre avec un recouvrement (20), et que le cadre est au mieux composé d'un tuyau courbé (19) ou d'une barre profile avec une coupe en forme de goutte (21) et cette barre est mise sur la traverse (4) éloignée du moyeu avec une extrémité, et avec l'autre sur la traverse (5) près du moyeu et relié avec celui-ci fixe ou séparable, et le tuyau courbé (19) ou la barre profilé peut être composé aussi de plusieurs pièces qui sont reliées fixe ou séparable par un raccord (22).

FIG. 1

FIG. 3

FIG. 2

FIG.4

FIG. 5

FIG. 7

FIG. 6

FIG. 8